# EUROPÄISCHE PATENTSCHRIFT

(11) **EP 3 230 136 B1**
(45) Veröffentlichungstag und Bekanntmachung des Hinweises auf die Patenterteilung: **30.09.2020**
(21) Anmeldenummer: 15807905.3
(22) Anmeldetag: 09.12.2015
(51) Int. Cl.: B60T 13/26, B60T 17/22, F15B 19/00

(54) **VERFAHREN UND SYSTEM ZUR FEHLERERKENNUNG IN EINEM DRUCKLUFTSYSTEM**
METHOD AND SYSTEM FOR FAILURE DETECTION IN A PRESSURIZED AIR SYSTEM
PROCÉDÉ ET SYSTÈME POUR LA DÉTECTION D'ERREURS DANS UN SYSTÈME DE PRESSION D'AIR

(30) Priorität: 12.12.2014 DE 102014018437
(43) Veröffentlichungstag der Anmeldung: 18.10.2017
(73) Patentinhaber: KNORR-BREMSE Systeme für Nutzfahrzeuge GmbH, 80809 München (DE)
(72) Erfinder: KRABOT, Matyas, 2310 Szigetszentmiklós (HU); VIG, Gabor, 1119 Budapest (HU); UDVARDY, Oliver, 1118 Budapest (HU)
(86) Internationale Anmeldenummer: PCT/EP2015/079167
(87) Internationale Veröffentlichungsnummer: WO 2016/091977

(56) Entgegenhaltungen:
- DE-A1-102007 023 819
- DE-B3- 10 236 391

## Beschreibung

Die Erfindung betrifft ein Verfahren zur Erkennung einer Fehlfunktion eines Druckluftsystems. Außerdem betrifft die Erfindung ein Druckluftsystem, vorzugsweise in einem Kraftfahrzeug, das Druckluftsystem umfassend einen Kompressor zur Drucklufterzeugung, ein Druckluftreservoir zur Bevorratung von Druckluft, vorzugsweise ein zwischen Kompressor und Druckluftreservoir angeordnetes Trocknermittel zur Trocknung von durchströmender Luft und eine Steuereinheit zur Steuerung des Kompressors zur Drucklufterzeugung und zur Regeneration beziehungsweise Trocknung des Trocknermittels.

Das Einsatzgebiet der Erfindung erstreckt sich auf Druckluftsysteme insbesondere von motorisierten Fahrzeugen, bei denen Kompressoren wie beispielsweise Kolbenkompressoren eingesetzt werden, um Umgebungsluft anzusaugen und beispielsweise in Druckluftreservoirs zur Verfügung zu stellen, von wo diese Druckluft beispielsweise zur Betätigung von Bremsen eingesetzt werden kann. In solchen Druckluftsystemen ist häufig zwischen Kompressor und Druckluftreservoir ein Trocknermittel angeordnet, welches Druckluft, die vom Kompressor in das Druckluftreservoir strömt, von Feuchtigkeit befreit, wobei es selbst diese Feuchtigkeit aufnimmt, und welches während der sogenannten Regeneration von trockener Luft aus dem Druckluftreservoir durchströmt wird, um selbst wiederum getrocknet zu werden. In solchen Druckluftsystemen kann es beispielsweise aufgrund von Verstopfungen durch beispielsweise Fremdkörper oder aufgrund von Leckage oder anderen Fehlfunktionen erforderlich sein, beispielsweise die Regeneration betreffende Parameter an jeweilige Fehlfunktion anzupassen.

Aus der DE 10 2007 023 819 A1 geht ein Verfahren und eine Vorrichtung hervor, bei dem an zwei verschiedenen Zeitpunkten der Luftdruck in einem Druckluftsystem gemessen wird und ein daraus gebildeter Kennwert mit einem Vergleichswert verglichen wird, um Rückschlüsse auf gegebenenfalls vorliegende Fehlfunktionen zu ziehen. Nachteilhaft hieran ist unter anderem die Notwendigkeit einer Messung des Druckes in dem Druckluftsystem mit einer hohen Präzision.

Aus der WO 03/013929 A1 geht ein Verfahren zur Regeneration und zum Betrieb eines Druckluftsystems hervor, bei dem die Regeneration an in dem Druckluftsystem gemessenen Druck angepasst wird. Auch hier ist eine präzise Druckmessung vonnöten

Ein weiteres Verfahren zur Erkennung einer Fehlfunktion ist aus DE 10236391 B bekannt.

Aus der DE 10 2006 019 865 B3 geht eine Kartusche für eine Druckluftaufbereitungsanlage hervor, welche über einen elektrischen Sensor verfügt, mit der der elektrische Widerstand oder die Kapazität der Kartusche gemessen wird, um auf deren Zustand, beispielsweise deren Sättigung zu schließen. Nachteilhaft an dieser Diagnostik ist die Notwendigkeit einer relativ aufwendigen zusätzlichen elektronischen Sensorik.

Es ist die Aufgabe der vorliegenden Erfindung, ein Verfahren zu schaffen, bei welchem mit geringem sensorischen Aufwand zuverlässig der Zustand, insbesondere eine Fehlfunktion, eines Druckluftsystems erkannt werden kann.

Die Aufgabe wird ausgehend von einem Verfahren gemäß dem Anspruch 1 gelöst. Die nachfolgenden abhängigen Ansprüche geben vorteilhafte Weiterbildungen der Erfindung wieder.

Die Erfindung schließt die technische Lehre ein, dass in einem ersten Schritt eine Zustandsgröße ausgangsseitig eines Kompressors gemessen und als erster Basiswert gespeichert wird und ein erster Zeitstempel erfasst und gespeichert wird, und in einem zweiten Schritt der Kompressor zur Erzeugung von Druckluft aktiviert wird und in einem dritten Schritt die Zustandsgröße erneut gemessen und als Vergleichswert gespeichert wird, und in einem vierten Schritt die Wertdifferenz zwischen dem Vergleichswert und dem Basiswert gebildet wird und in einem Wertevergleichsschritt die Wertdifferenz mit einem Schwellwert verglichen wird und in dem Falle, dass die Wertdifferenz kleiner ist als der Schwellwert, das Verfahren ab dem dritten Schritt wiederholt wird und andernfalls in einem sechsten Schritt ein zweiter Zeitstempel erfasst und der Zeitabstand zum ersten Zeitstempel errechnet wird und in einem Zeitvergleichsschritt die Abweichung des Zeitabstandes von einem Zeitabstandreferenzwert bestimmt wird und bei Abweichung außerhalb eines Toleranzintervalls in einem Diagnoseschritt der Abweichung eine Fehlfunktion zugeordnet wird.

Die Erfindung basiert also auf der Idee, eine Zustandsgröße vor Aktivierung des Kompressors in dem Druckluftsystem zu messen, um dann den Kompressor zu starten, und die Zeit zu messen, bis die Messgröße sich verändert beziehungsweise bis sie einen beispielsweise über einem üblichen Rauschwert liegenden Schwellwert überschritten hat. Dabei kann die Messung hinter einem ausgangsseitig des Kompressors angeordneten Mindestdruckventil oder Rückschlagventil stattfinden, so dass die Zeit gemessen wird, bis der erforderliche Druck zum Öffnen des Ventils erreicht ist. Dieser gemessene Zeitabstand zwischen Aktivierung des Kompressors und Veränderung der Messgröße wird dann mit einem Zeitabstandreferenzwert verglichen. Dieser

Zeitabstandreferenzwert ist idealerweise die Zeit, in der sich die Messgröße bei einem fehlerfreien, funktionstüchtigen Druckluftsystem nicht verändert. Bei Abweichung des Zeitabstandes von dem Zeitabstandreferenzwert über ein Toleranzintervall hinaus wird dann erfindungsgemäß auf eine Fehlfunktion geschlossen. Das Toleranzintervall muss dabei nicht notwendigerweise symmetrisch um den Zeitabstandreferenzwert angeordnet sein. Beispielsweise kann, wenn als Zustandsgröße der Druck gewählt wird, im Falle einer Blockierung in einem Bereich hinter dem den Druck aufnehmenden Sensor der Zeitabstand bis zur Erhöhung des Druckes verkürzt sein, während bei beispielsweise einem Leck der Zeitabstand verlängert beziehungsweise über dem Zeitabstandreferenzwert liegen würde.

Zur Messung der Zustandsgröße kann beispielsweise ein Drucksensor ausgangsseitig des Kompressors angeordnet sein. Eine ausgangsseitige Anordnung schließt ein, dass beispielsweise pneumatische Elemente wie Ventile oder Trocknungsmittel dazwischen geschaltet sind. Die Messung muss also nicht unmittelbar am Ausgang des Kompressors stattfinden, sondern kann auch in einem beliebigen Bereich des Druckluftsystems stattfinden, der einen anderen Druck als der Ausgang des Kompressors besitzt. Vorzugsweise kann beispielsweise ein Bereich parallel zu dem Druckluftreservoir oder ein Bereich in dem Druckluftreservoir gewählt werden.

Der Vorteil dieses Verfahrens liegt unter anderem darin, dass als Messgröße, die zur Bestimmung der Fehlfunktion verwendet wird, die technisch sehr einfach und sehr präzise messbare Zeit gemessen wird, statt anderer physikalischer Parameter wie Druck oder Teilchenfluss.

Gemäß einer bevorzugten Ausführungsform der Erfindung wird im ersten Schritt und im dritten Schritt als Zustandsgröße der Druck, die Masse, die Temperatur und/oder der Fluss von Luft ausgangsseitig des Kompressors gemessen.

Der Vorteil an der Wahl einer oder mehrerer dieser Zustandsgrößen ist darin zu sehen, dass diese Größen in ihrem zeitlichen Verlauf, der letztendlich zur Bestimmung der Fehlfunktion gemessen wird, durch typischerweise auftretende Fehlfunktionen unmittelbar beeinflusst werden. Außerdem wird für die Messung dieser Zustandsgrößen auf Diagnostik zurückgegriffen, die typischerweise in herkömmlichen Druckluftsystemen bereits vorgesehen ist.

Gemäß einer Verbesserung der Erfindung wird in einem auf den Diagnoseschritt folgenden Aktionsschritt auf die Fehlfunktion reagiert.

Gemäß einer hierauf bezogenen bevorzugten Ausführungsform der Erfindung wird in dem Aktionsschritt die Fehlfunktion durch Speicherung in einer elektronischen Speichereinheit und/oder Signalisierung, beispielsweise an eine Mensch-Maschineschnittstelle, wie beispielsweise eine Anzeige, weiterverarbeitet.

Der Vorteil ist hierbei darin zu sehen, dass bei Speicherung auftretende Fehlfunktionen beispielsweise zu Wartungszwecken in einer Werkstatt behoben werden können, oder dass im Falle der Signalisierung beispielsweise ein Fahrer eines betreffenden Kraftfahrzeuges über das Auftreten der jeweiligen Fehlfunktion informiert wird.

Eine andere bevorzugte Ausführungsform sieht vor, dass in dem Aktionsschritt die Regeneration des Druckluftsystems an die Fehlfunktion angepasst wird, beispielsweise indem die für die Regeneration vorgesehene Menge an Luft oder der dafür vorgesehene Luftfluss erhöht wird und/oder die Regeneration gestartet wird.

Der Vorteil ist hier darin zu sehen, dass eine auftretende Fehlfunktion gegebenenfalls durch veränderte Ansteuerung prinzipiell unverzüglich kompensiert werden kann. Beispielsweise kann eine Verstopfung durch erhöhten Luftfluss, beispielsweise über Ventile geregelt, ausgeglichen werden.

Eine bevorzugte Ausführungsform der Erfindung basiert darauf, dass im Diagnoseschritt bei Abweichung außerhalb des Toleranzsintervalls als Fehlfunktion eine Leckage und/oder eine Verstopfung einer pneumatischen Steuerleitung oder ein Kurzschluss und/oder ein Kabelbruch und/oder ein Datenverlust einer elektrischen Steuerleitung oder Leckage und/oder Verstopfung und/oder pneumatischer Kurzschluss einer Druckluftleitung zugeordnet wird.

Der Vorteil dieser Ausführungsform ist darin zu sehen, dass diese Fehlfunktionen durch das beschriebenen Verfahren bei entsprechender Auswertung besonders gut zur Erkennung eignen.

Eine Verbesserung der Erfindung sieht, dass im Diagnoseschritt bei Abweichung innerhalb des Toleranzintervalls der Abweichung Funktionstüchtigkeit statt eine Fehlfunktion zugeordnet wird.

Dies bedeutet, dass das Verfahren auch das Wegfallen beziehungsweise Fernbleiben einer Fehlfunktion erkennen und dementsprechend gegebenenfalls im Aktionsschritt darauf reagieren kann. So kann beispielsweise, wenn eine zuvor erkannte Fehlfunktion wegfällt und das Druckluftsystem somit wieder funktionstüchtig ist, die zuvor gegebenenfalls geänderte Regeneration wieder an den Normalzustand angepasst werden und die Funktionstüchtigkeit beispielsweise per Signalisierung ausgegeben oder in einer Speichereinheit gespeichert werden.

Eine bevorzugte Ausführungsform der Erfindung sieht vor, dass der Zeitabstandreferenzwert und/oder der Schwellwert, über den die Zustandsgröße hinaus sich verändern muss, automatisiert verändert wird.

Der Vorteil besteht hierbei insbesondere darin, dass eine zur Steuerung des Druckluftsystems vorgesehene Steuerungseinheit somit beispielsweise aus störungsfreiem Betrieb lernt und die für die Fehlfunktionszuordnung nötigen Parameter eigenständig an das Druckluftsystem anpasst.

Gemäß einer vorteilhaften Ausführungsform der Erfindung wird der Zeitabstandreferenzwert und/oder der Schwellwert an statische Parameter, umfassend das Volumen des ausgangsseitig des Kompressors angeordneten Druckluftsystems, und/oder dynamische Parameter, umfassend den Fluss von Druckluft ausgangsseitig des Kompressors, angepasst.

Der Vorteil dieser Ausführungsform ist darin zu sehen, dass die für die Erkennung einer Fehlfunktion wesentlichen Parameter an statische Parameter, welche das Druckluftsystem charakterisieren, angepasst werden können, sofern sich dies beispielsweise zur Erhöhung der Präzision der Zuordnung von Fehlfunktionen als vorteilhaft erweist.

Die Erfindung betrifft darüber hinaus ein Druckluftsystem vorzugsweise eines Kraftfahrzeuges, welches über eine Steuereinheit verfügt, die über Rechenanweisungen verfügt, um das erfindungsgemäße Verfahren durchzuführen. Vorzugsweise verfügt das Druckluftsystem über ein zwischen Kompressor und Druckluftreservoir angeordnetes Trocknermittel zur Trocknung von durchströmender Luft, wobei das Trocknungsmittel in einem Regenerationsmodus durch entgegengesetzt strömende trockene Luft getrocknet wird.

Weitere die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1: ein Flussdiagramm des erfindungsgemäßen Verfahrens, und
- Figur 2: ein schematisierter Aufbau zur Durchführung dieses Verfahrens.

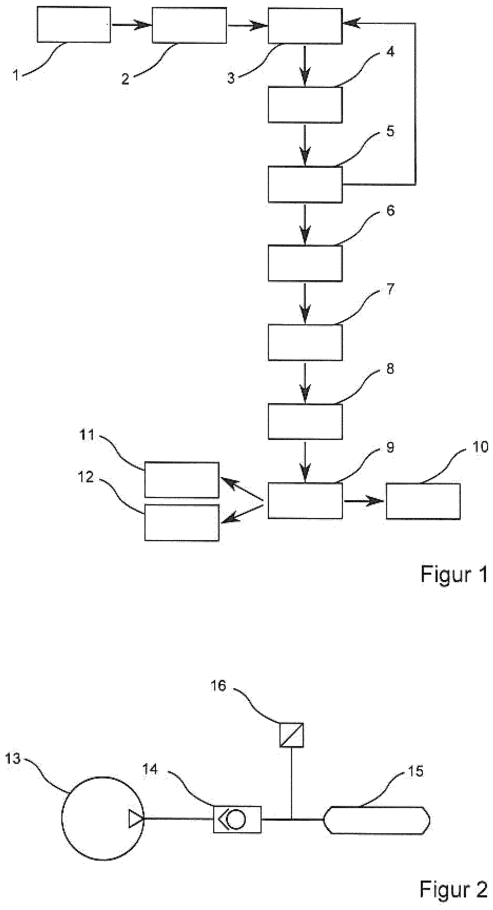

Gemäß Figur 1 wird zur Erkennung einer Fehlfunktion eines Druckluftsystems in einem ersten Schritt 1 der Luftdruck ausgangsseitig eines Kompressors 13 gemessen und als erster Basiswert gespeichert. Der betreffende Zeitpunkt wird festgehalten, indem gleichzeitig ein erster Zeitstempel erfasst und gespeichert wird. In einem darauf folgenden zweiten Schritt 2 wird der Kompressor 13 zur Erzeugung von Druckluft aktiviert. In einem unmittelbar oder zeitlich beabstandet folgenden dritten Schritt 3 wird der Luftdruck erneut gemessen und als Vergleichswert gespeichert. In einem vierten Schritt 4 wird die Wertdifferenz zwischen dem Vergleichswert und dem Basiswert gebildet und in einem Wertevergleichsschritt 5 mit einem Schwellwert verglichen.

In dem Fall, dass die Wertdifferenz kleiner ist als der Schwellwert, wird das Verfabren ab dem dritten Schritt 3 wiederholt. Andernfalls wird in einem sechsten Schritt 6 ein zweiter Zeitstempel erfasst und der Zeitabstand zum ersten Zeitstempel errechnet. In einem Zeitvergleichsschritt 7 wird die Abweichung des Zeitabstandes von einem Zeitabstandreferenzwert bestimmt.

Bei einer Abweichung des Zeitabstandes von dem Zeitabstandreferenzwert außerhalb eines Toleranzintervalls wird in einem Diagnoseschritt 8 der Abweichung eine Fehlfunktion zugeordnet. Beispielsweise kann eine Verstopfung mit einem entsprechend erhöhtem Strömungswiderstand diagnostiziert werden, wenn der Zeitabstand entsprechend weit über dem Zeitabstandreferenzwert liegt.

Nach der Diagnose einer Fehlfunktion wird in einem Aktionsschritt 9 sowohl die Regeneration 10 des Druckluftsystems gestartet, als auch die Fehlfunktion durch Speicherung 11 und Signalisierung 12 weiter verarbeitet.

Gemäß Figur 2 ist ausgangsseitig des Kompressors 13 ein Rückschlagventil 14 angeordnet. Hinter dem Rückschlagventil 13, bezogen auf die Luftströmungsrichtung der durch den Kompressor 13 erzeugten Druckluft, insbesondere weiterhin ausgangsseitig des Kompressors 13, ist ein Drucksensor 16 parallel zu einem Druckluftreservoir 15 angeschlossen. Mit diesem Drucksensor 16 können jeweils die Luftdruckmessungen der Schritte 1 und 3 des oben beschriebenen Verfahrens durchgeführt werden.

Dadurch, dass ein Rückschlagventil 13 zwischen Drucksensor 16 und Kompressor 13 angeordnet ist, ist insbesondere typischerweise der gemessene Luftdruck in Schritt 1 höher als der Atmosphärendruck, und die Zeitdifferenz bis zum Überschreiten des Schwellwertes hängt beispielsweise von dem gegebenenfalls vorbelasteten Rückschlagventil 16 und dem bereits im Druckluftreservoir 15 anliegenden Luftdruck ab.

Die Erfindung ist nicht beschränkt auf das vorstehend beschriebene Ausführungsbeispiel. Es sind auch Abwandlungen hiervon denkbar, welche von den nachfolgenden Ansprüchen mit umfasst sind. Es ist beispielsweise auch möglich, dass statt des Luftdrucks der Luftfluss gemessen wird.

### Bezugszeichenliste

- 1: erster Schritt
- 2: zweiter Schritt
- 3: dritter Schritt
- 4: vierter Schritt
- 5: Wertevergleichsschritt
- 6: sechster Schritt
- 7: Zeitvergleichsschritt
- 8: Diagnoseschritt
- 9: Aktionsschritt
- 10: Regeneration
- 11: Speicherung
- 12: Signalisierung
- 13: Kompressor
- 14: Rückschlagventil
- 15: Druckluftreservoir
- 16: Drucksensor

## Patentansprüche

1. Verfahren zur Erkennung einer Fehlfunktion eines Druckluftsystems, wobei in einem ersten Schritt (1) eine Zustandsgröße ausgangsseitig eines Kompressors (13) gemessen und als erster Basiswert gespeichert wird und ein erster Zeitstempel erfasst und gespeichert wird, und in einem zweiten Schritt (2) der Kompressor (13) zur Erzeugung von Druckluft aktiviert wird und in einem dritten Schritt (3) die Zustandsgröße erneut gemessen und als Vergleichswert gespeichert wird, und in einem vierten Schritt (4) die Wertdifferenz zwischen dem Vergleichswert und dem Basiswert gebildet wird und in einem Wertevergleichsschritt (5) die Wertdifferenz mit einem Schwellwert verglichen wird und im Falle, dass die Wertdifferenz kleiner ist als der Schwellwert, das Verfahren ab dem dritten Schritt (3) wiederholt wird und andernfalls in einem sechsten Schritt (6) ein zweiter Zeitstempel erfasst und der Zeitabstand zum ersten Zeitstempel errechnet wird und in einem Zeitvergleichsschritt (7) die Abweichung des Zeitabstandes von einem Zeitabstandreferenzwert bestimmt wird und bei Abweichung außerhalb eines Toleranzintervalls in einem Diagnoseschritt (8) der Abweichung eine Fehlfunktion zugeordnet wird, so dass die Zustandsgröße vor Aktivierung des Kompressors in dem Druckluftsystem gemessen wird, um dann den Kompressor zu starten, und die Zeit zu messen, bis die Messgröße sich verändert und einen über einem üblichen Rauschwert liegenden Schwellwert überschritten hat.

2. Verfahren nach Anspruch 1,
**dadurch gekennzeichnet, dass** im ersten Schritt (1) und im dritten Schritt (3) als Zustandsgröße der Druck, die Masse, die Temperatur und / oder der Fluss von Luft ausgangsseitig des Kompressors (13) gemessen wird.

3. Verfahren nach einem der vorherigen Ansprüche,
**dadurch gekennzeichnet, dass** in einem auf den Diagnoseschritt (8) folgenden Aktionsschritt (9) auf die Fehlfunktion reagiert wird.

4. Verfahren nach Anspruch 3,
**dadurch gekennzeichnet, dass** in dem Aktionsschritt (9) die Fehlfunktion durch Speicherung (11) und / oder Signalisierung (12) weiterverarbeitet wird.

5. Verfahren nach einem der Ansprüche 3 oder 4,
**dadurch gekennzeichnet, dass** in dem Aktionsschritt (9) die Regeneration (10) des Druckluftsystems an die Fehlfunktion angepasst wird, indem die für die Regeneration (10) vorgesehene Menge an Luft oder der dafür vorgesehene Luftfluss erhöht wird und / oder die Regeneration (10) gestartet wird.

6. Verfahren nach einem der vorherigen Ansprüche,
**dadurch gekennzeichnet, dass** im Diagnoseschritt (8) der Abweichung außerhalb des Toleranzintervalls als Fehlfunktion eine Leckage und / oder eine Verstopfung einer pneumatischen Steuerleitung oder ein Kurzschluss und / oder ein Kabelbruch und / oder ein Datenverlust einer elektrischen Steuerleitung oder Leckage und / oder Verstopfung und / oder pneumatischer Kurzschluss einer Druckluftleitung zugeordnet wird.

7. Verfahren nach einem der vorherigen Ansprüche,
**dadurch gekennzeichnet, dass** im Diagnoseschritt (8) bei Abweichung innerhalb des Toleranzintervalls der Abweichung Funktionstüchtigkeit statt eine Fehlfunktion zugeordnet wird.

8. Verfahren nach einem der vorherigen Ansprüche,
**dadurch gekennzeichnet, dass** der Zeitabstandreferenzwert und / oder der Schwellwert automatisiert verändert wird.

9. Verfahren nach einem der vorherigen Ansprüche,
**dadurch gekennzeichnet, dass** der Zeitabstandreferenzwert und / oder Schwellwert an statische Parameter, umfassend das Volumen des ausgangsseitig des Kompressors (13) angeordneten Druckluftsystems, und / oder dynamische Parameter, umfassend den Fluss von Druckluft ausgangsseitig des Kompressors (13), angepasst wird.

10. Druckluftsystem, umfassend einen Kompressor (13) zur Drucklufterzeugung, ein Druckluftreservoir (15) zur Bevorratung von Druckluft und eine Steuereinheit zur Steuerung des Kompressors (13),
**dadurch gekennzeichnet, dass** die Steuereinheit über Rechenanweisungen verfügt, um ein Verfahren nach den Ansprüchen 1 bis 9 auszuführen.

## Claims

1. Method for detecting a malfunction of a compressed-air system, wherein in a first step (1) a condition parameter on the output side of a compressor (13) is measured and stored as a first basis value and a first time-stamp is detected and stored, and in a second step (2) the compressor (13) is activated to produce compressed air, and in a third step (3) the condition parameter is measured again and stored as a comparison value, and in a fourth step (4) the difference between the comparison value and the basis value is calculated and in a value comparison strep (5) the difference between these values is compared with a threshold value, and if the value difference is smaller than the threshold value the process is repeated from the third step (3) whereas otherwise, in a sixth step (6) a second time-stamp is determined and the time difference from the first time-stamp is calculated, and in a time comparison step (7) the deviation of the time difference from a time difference reference value is determined, and if this deviation is outside a tolerance range, in a diagnosis step (8) the deviation is associated with a malfunction, so that the condition parameter is measured before the activation of the compressor in the compressed-air system in order then to start the compressor and to measure the time until the measured value changes and has exceeded a threshold value that is more than a usual noise value.

2. Method according to Claim 1,
**characterised in that** in the first step (1) and in the third step (3), as the condition parameter the pressure, the mass, the temperature and/or the flow of air on the output side of the compressor (13) is measured.

3. Method according to either of the preceding claims,
**characterised in that** in an action step (9) that follows the diagnosis step (8), a reaction to the malfunction takes place.

4. Method according to Claim 3,
**characterised in that** in the action step (9) the malfunction is processed further by storage (11) and/or signalling (12).

5. Method according to either of Claims 3 or 4,
**characterised in that** in the action step (9) the regeneration (10) of the compressed-air system is adapted to the malfunction, **in that** the quantity of air provided for the regeneration (10) or the air flow provided for the same is increased and/or the regeneration (10) is initiated.

6. Method according to any of the preceding claims,
**characterised in that** in the diagnosis step (8) the deviation outside the tolerance range is associated as the malfunction with a leak and/or a blockage in a pneumatic control line, or a short-circuit and/or a cable breakage and/or a data loss in an electric control line, or a leakage and/or a blockage and/or a pneumatic short-circuit in a compressed-air line.

7. Method according to any of the preceding claims,
**characterised in that** in the diagnosis step (8), if the deviation is within the deviation tolerance range, proper functionality is associated with the deviation instead of a malfunction.

8. Method according to any of the preceding claims,
**characterised in that** the time difference reference value and/or the threshold value is varied automatically.

9. Method according to any of the preceding claims,
**characterised in that** the time difference reference value and/or the threshold value is adapted to static parameters including the volume of the compressed-air system arranged on the output side of the compressor (13) and/or to dynamic parameters including the flow of compressed air on the output side of the compressor (13).

10. Compressed-air system comprising a compressor (13) for the production of compressed air, a compressed-air reservoir (15) for the storage of compressed air and a control unit for controlling the compressor (13),
**characterised in that** the control unit is provided with computation commands that enable it to carry out a method according to Claims 1 to 9.

## Revendications

1. Procédé de détection d'un fonctionnement défectueux d'un système à air comprimé, dans lequel, dans un premier stade (1), on mesure une grandeur d'état du côté de la sortie d'un compresseur (13) et on la mémorise comme première valeur de base et on relève un premier horodatage et on le mémorise et, dans un deuxième stade (2), on active le compresseur (13) pour la production d'air comprimé et, dans un troisième stade (3), on mesure à nouveau la grandeur d'état et on la mémorise comme valeur de comparaison et, dans un quatrième stade (4), on forme la différence entre la valeur de comparaison et la valeur de base et, dans un stade (5) de comparaison de valeurs, on compare la différence à une valeur de seuil et, dans le cas où la différence est plus petite que la valeur de seuil, on répète le procédé à partir du troisième stade (3) et, sinon, dans un sixième stade (6), on relève un deuxième horodatage et on calcule l'intervalle de temps par rapport au premier horodatage et, dans un stade (7) de comparaison de temps, on détermine l'écart de l'intervalle de temps à une valeur de référence d'intervalle de temps et, s'il y a un écart en dehors d'un intervalle de tolérance, dans un stade (8) de diagnostic, on associe à l'écart un fonctionnement défectueux, de sorte que la grandeur d'état soit mesurée avant l'activation du compresseur dans le système d'air comprimé et ensuite, on fait démarrer le compresseur et on mesure le temps jusqu'à ce que la grandeur de mesure se modifie et ait dépassé une valeur de seuil se trouvant au-dessus d'une valeur de bruit habituelle.

2. Procédé suivant la revendication 1,
**caractérisé en ce que** dans le premier stade (1) et dans le troisième stade (3), on mesure, comme grandeur d'état, la pression, la masse, la température et/ou le flux d'air du côté de la sortie du compresseur (13).

3. Procédé suivant l'une des revendications précédentes, **caractérisé en ce que**, dans un stade (9) d'action suivant le stade (8) de diagnostic, on réagit au fonctionnement défectueux.

4. Procédé suivant la revendication 3,
**caractérisé en ce que**, dans le stade (9) d'action, on traite davantage le fonctionnement défectueux par mise en mémoire (11) et/ou signalisation (12).

5. Procédé suivant l'une des revendications 3 ou 4, **caractérisé en ce que**, dans le stade (9) d'action, on adapte la régénération (10) du système d'air comprimé au fonctionnement défectueux en augmentant la quantité d'air prévue pour la régénération (10) ou le flux d'air prévu à cet effet et/ou en faisant commencer la régénération (10).

6. Procédé suivant l'une des revendications précédentes, **caractérisé en ce que**, dans le stade (8) de diagnostic, on associe à l'écart, à l'extérieur de l'intervalle de tolérance, comme fonctionnement défectueux, une fuite et/ou un bouchage d'un conduit de commande pneumatique ou un court-circuit et/ou une rupture de câble et/ou une perte de données d'une ligne électrique de commande ou une fuite et/ou un bouchage et/ou un court-circuit pneumatique d'un conduit pour de l'air comprimé.

7. Procédé suivant l'une des revendications précédentes, **caractérisé en ce que**, dans le stade (8) de diagnostic, s'il y a un écart dans l'intervalle de tolérance, on associe à l'écart une aptitude à fonctionner au lieu d'un fonctionnement défectueux.

8. Procédé suivant l'une des revendications précédentes, **caractérisé en ce que**
l'on modifie de manière automatisée la valeur de référence d'intervalle de temps et/ou la valeur de seuil.

9. Procédé suivant l'une des revendications précédentes, **caractérisé en ce que** l'on adapte la valeur de référence d'intervalle de temps et/ou la valeur de seuil à des paramètres statiques, comprenant le volume du système d'air comprimé disposé du côté de la sortie du compresseur (13) et/ou des paramètres dynamiques, comprenant le flux d'air comprimé du côté de la sortie du compresseur (13).

10. Système d'air comprimé, comprenant un compresseur (13) de production d'air comprimé, un réservoir (15) d'air comprimé pour mettre en réserve de l'air comprimé et une unité de commande pour commander le compresseur (13),
**caractérisé en ce que** l'unité de commande dispose d'instructions informatiques pour effectuer un procédé suivant l'une des revendications 1 à 9.
